# EUROPÄISCHE PATENTANMELDUNG

(11) **EP 0 902 241 A2**
(43) Veröffentlichungstag der Anmeldung: **17.03.1999**
(21) Anmeldenummer: 98116706.7
(22) Anmeldetag: 03.09.1998
(51) Int. Cl.: F24F 5/00

(54) **Profil für eine Kühldecke, Kühlwand oder Boden**

(30) Priorität: 09.09.1997 DE 19739614
(71) Anmelder: Erbslöh Aktiengesellschaft, 42553 Velbert (DE)
(72) Erfinder: Sucke, Norbert-William, Dipl.-Phys.-Ing., 47269 Duisburg (DE)
(74) Vertreter: Mentzel, Norbert, Dipl.-Phys.

(57) **Zusammenfassung**

Die Erfindung bezieht sich auf ein Profil für eine Kühldecke, Kühlwand oder Kühlboden, insbesondere für eine offen oder geschlossen ausgebildete Kühldecke, mit einem Deckenabschnitt und daran angeordneten Kühlelementen, wie z.B. Kühlkanälen, zur Führung eines Wärmeaustauschmediums, wobei die Kühlelemente in gleichmäßigen Abständen über die Kühldecke verteilt angeordnet sind. Dabei ist das Profil als Mehrkammerhohlprofil ausgebildet.

## Beschreibung

Die Erfindung bezieht sich auf ein Profil für eine Kühldecke, Kühlwand oder Boden, insbesondere für eine offen oder geschlossen ausgebildete Kühldecke, mit einem Teil-, wie Deckenabschnitt und daran angeordneten Kühlelementen, wie z.B. Kühlkanälen, zur Führung eines Wärmeaustauschmediums, wobei die Kühlelemente in gleichmäßigen Abständen über die Kühldecke verteilt angeordnet sind.

Aus dem Stand der Technik sind solche Ausführungsformen von Deckenprofilen für eine offen oder geschlossen ausgebildete Kühldecke bekannt, bei denen an einem Deckenabschnitt aus Metall oder Kunststoff über Befestigungselemente, wie z.B. Halteklammern od.dgl., z.B. Kupferrohre zur Führung des Wärmeaustauschmediums, wie Kühlflüssigkeit, angeordnet sind. Die Kupferrohre können dabei zusätzlich z.B. über eine Klebeverbindung an dem Deckenabschnitt befestigt sein. Ein solches Deckenprofil hat an sich den Vorteil, daß es für Kühldeckensysteme zur Kühlung beliebiger Räume einsetzbar ist. Nachteilig ist bei den bekannten Ausführungsformen die aufwendige und kostenintensive Herstellung und, bedingt durch den konstruktiven Aufbau, das Fehlen von gestalterischen Möglichkeiten der Oberfläche. Weiter nachteilig ist die schlechte Temperaturverteilung derartiger Kühldecken und die reduzierte Wärmeleitfähigkeit an der Verbindungsstelle, wie z.B. Klebestelle, zwischen Deckenabschnitt und Kupferrohr.

Der Erfindung liegt die Aufgabe zugrunde, die bekannten Ausführungsformen von Profilen für Kühlflächen unter Beibehaltung der bisherigen Vorteile in der Weise zu verbessern, daß sie einfacher und wirtschaftlicher als bisher herstellbar sind, bessere Funktionseigenschaften und ein gestalterisch variables Erscheinungsbild aufweisen.

Die Aufgabe wird erfindungsgemäß dadurch gelöst, daß das Profil als Mehrkammerhohlprofil ausgebildet ist. Auf diese Weise wird erstmalig mit einfachen Mitteln ein Deckenprofil für eine Kühldecke geschaffen, bei dem auf zusätzliche Mittel zur Führung des Wärmeaustauschmediums, wie Kühlflüssigkeit, gänzlich verzichtet werden kann, da durch das Mehrkammerhohlprofil beide Funktionen, Durchfluß des Mediums und Wärmeleitung, erfüllt werden. Es lassen sich mit dem erfindungsgemäßen Mehrkammerhohlprofil flache Bauformen realisieren, es weisen diese Mehrkammerhohlprofile außerdem eine günstige Temperaturverteilung, d.h. insbesondere eine gleichmäßige Oberflächentemperatur, auf. Neben den erwähnten Vorteilen der zwei Funktionen wird außerdem eine Wandstärkenreduzierung und dadurch eine Materialersparnis erreicht und aufgrund fehlender Verbindungsstellen zwischen den unterschiedlichen Materialien kommt es bei der einstückigen Ausführungsform nicht zu dadurch bedingter reduzierter Wärmeleitung. Weiterhin bietet das erfindungsgemäße Mehrkammerhohlprofil Möglichkeiten für gestalterische Variationen der Profilform z.B. für unterschliedliche Luftführungen.

Bei der bevorzugten Ausführungsform der vorliegenden Erfindung ist das Profil als einstückig ausgebildetes Mehrkammerhohlprofil ausgebildet.

Bei einer anderen Ausführungsform der vorliegenden Erfindung ist das Profil als zweiteilig ausgebildetes Mehrkammerhohlprofil ausgebildet.

Nach einem weiteren Vorschlag der vorliegenden Erfindung weist das Mehrkammerhohlprofil rechteckig ausgebildete, in gleichmäßigen Abständen über die Kühldecke verteilte Kühlelemente, wie z.B. Kühlkanäle, auf.

Bei einer anderen Ausführungsform der vorliegenden Erfindung weist das Mehrkammerhohlprofil kreisförmig ausgebildete, in gleichmäßigen Abständen über die Kühldecke verteilte Kühlelemente, wie z.B. Kühlkanäle, auf.

Bei einer weiteren Ausführungsform der vorliegenden Erfindung weist das Mehrkammerhohlprofil einseitig gebogen ausgebildete, in gleichmäßigen Abständen über die Kühldecke verteilte Kühlelemente, wie z.B. Kühlkanäle, auf.

Es empfiehlt sich, daß das Mehrkammerhohlprofil im wesentlichen geradflächig ausgebildet ist. Es ist dies die konstruktiv einfachste Ausführungsform.

Zur Vergrößerung der Fläche für eine Wärmeabführung (durch Konvektion) wird nach einem weiteren Merkmal der vorliegenden Erfindung vorgeschlagen, daß das Mehrkammerhohlprofil endseitig wenigstens einen abgewinkelten Teilabschnitt aufweist. Dadurch wird die aufsteigende Warmluft um das Profil herumgeleitet.

Bei einer anderen Ausführungsform ist vorgesehen, daß das Mehrkammerhohlprofil endseitig wenigstens einen abgebogen ausgebildeten Teilabschnitt aufweist.

Zweckmäßig ist es, daß das Mehrkammerhohlprofil zusätzliche Mittel zur Vergrößerung der Kühlfläche aufweist. Dabei sind bevorzugt diese zusätzlichen Mittel zur Vergrößerung der Kühlfläche als eine an der Raumseite oder der gesamten Oberfläche des Mehrkammerhohlprofiles befindliche, strukturierte Oberfläche ausgebildet.

Bei einer anderen Ausführungsform der vorliegenden Erfindung sind die Mittel zur Vergrößerung der Kühlfläche als an der Raumseite des Mehrkammerhohlprofiles befindliche Rippen ausgebildet. Diese Ausführungsform ist konstruktiv einfach zu realisieren.

Nach einem weiteren Vorschlag der vorliegenden Erfindung ist das Mehrkammerhohlprofil an der Raumseite farb- und/oder oberflächenveränderlich ausgebildet. Auf diese Weise sind unterschiedliche dekorative Ausgestaltungen der jeweiligen Kühldecke möglich.

Das Mehrkammerprofil bietet die Möglichkeit unterschiedlicher Führung für das Kühlmedium. So kann das Kühlmedium beispielsweise gleichzeitig durch die parallel angeordneten Kühlkanäle geleitet werden. Vorteilhaft ist jedoch, den Volumenstrom des Kühlmediums mehrfach umzuleiten, d.h. vom ersten Kühlkanal in den benachbarten zweiten Kühlkanal von dort in den dritten usw. In diesen, Fall werden die Kühlkanäle nacheinander durchflossen. Es wird dazu weniger Kühlmedium benötigt und somit die spezifische Leistung erhöht.

Die Erfindung ist in den Fig. der Zeichnung in mehreren Ausführungsbeispielen dargestellt. Es zeigen:
- Fig. 1: eine perspektivische Ansicht einer schematischen Darstellung eines Teilabschnittes des erfindungsgemäßen Profiles für eine offen oder geschlossen ausgebildete Kühldecke in einer ersten Ausführungsform,
- Fig. 2: eine schematische Darstellung eines montierten Profiles für eine Kühldecke gemäß dem Ausführungsbeispiel nach Fig. 1 in einer Vorderansicht,
- Fig. 3: eine zweite Ausführungsform des erfindungsgemäßen Profiles in Vorderansicht, teilweise weggebrochen,
- Fig. 4: eine dritte Ausführungsform des erfindungsgemäßen Profiles in Vorderansicht, teilweise weggebrochen,
- Fig. 5: eine vierte Ausführungsform des erfindungsgemäßen Profiles in Vorderansicht, teilweise weggebrochen,
- Fig. 6: eine fünfte, zweiteilige Ausführungsform des erfindungsgemäßen Profiles in Vorderansicht, teilweise weggebrochen.

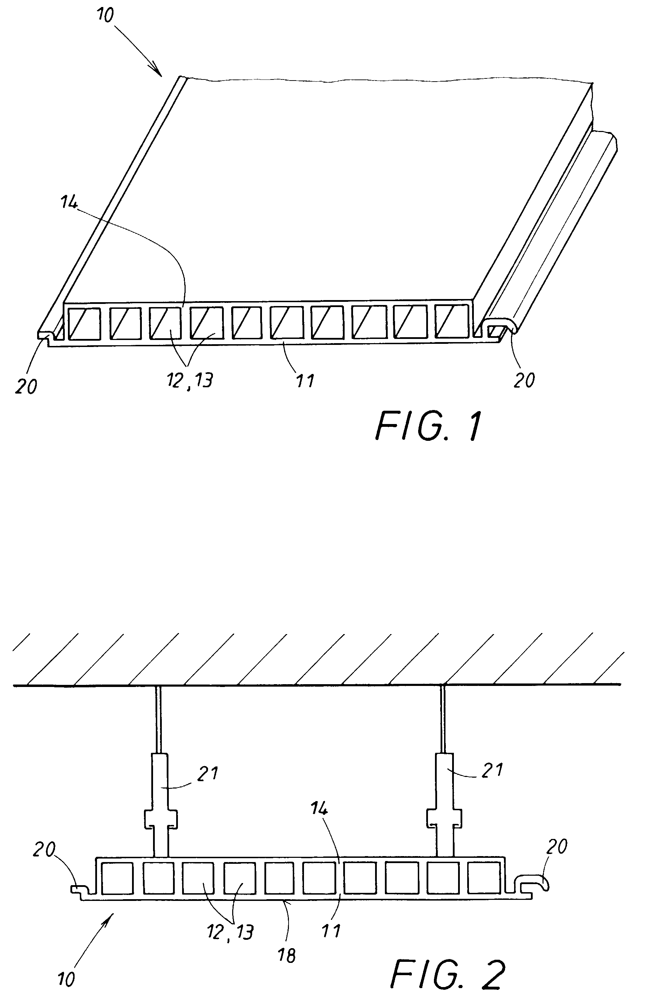

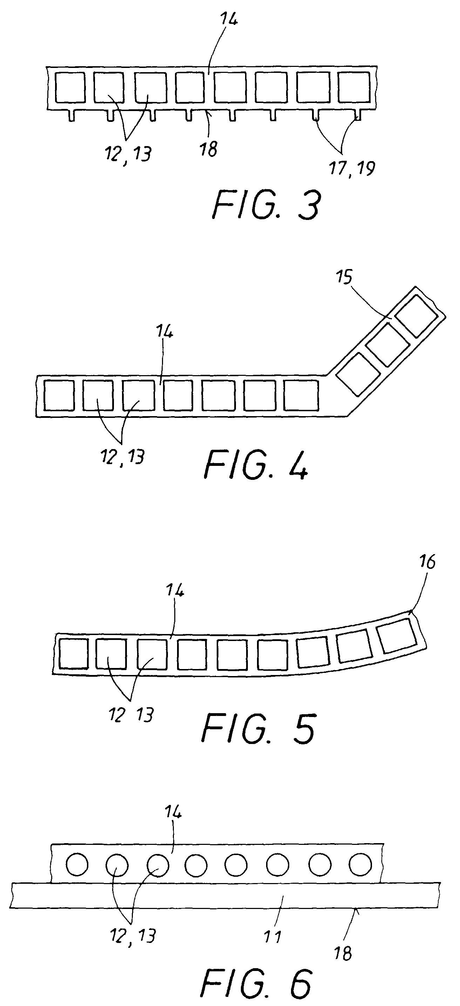

Das erfindungsgemäße Profil für eine Kühldecke, Kühlwand oder Boden, insbesondere für eine offen oder geschlossen ausgebildete Kühldecke ist generell mit 10 bezeichnet. Es ist zur Verwendung bei Kühldeckensystemen zur Kühlung beliebiger Räume vorgesehen. Das Profil 10 besteht aus einem Teil-, wie Deckenabschnitt 11 und daran angeordneten Kühlelementen 12, wie z.B. Kühlkanälen 13, zur Führung eines Wärmeaustauschmediums, wie z.B. Kühlflüssigkeit, wobei die Kühlelemente 12 in gleichmäßigen Abständen über die Kühldecke verteilt angeordnet sind. Das erfindungsgemäße Profil 10 ist als Mehrkammerhohlprofil, insbesondere stranggepreßtes Aluminiumprofil, 14 ausgebildet. Bei den Ausführungsformen nach den Fig. 1 bis 5 ist das Mehrkammerhohlprofil 14 einstückig, bei dem in Fig. 6 gezeigten Ausführungsbeispiel zweiteilig ausgebildet.

Das Mehrkammerhohlprofil 14 weist bei den in den Fig. 1 bis 5 der Zeichnung dargestellten Ausführungsbeispielen rechteckig ausgebildete, in gleichmäßigen Abständen über die Kühldecke verteilte Kühlelemente 12, wie z.B. Kühlkanäle 13, auf. Es sind aber auch andere Ausgestaltungsformen denkbar, so weist bei einer anderen Ausführungsform (Fig. 6) das Mehrkammerhohlprofil 14 kreisförmig ausgebildete, in gleichmäßigen Abständen über die Kühldecke verteilte Kühlelemente 12, wie z.B. Kühlkanäle 13, auf. Bei einer weiteren Ausführungsform weist das Mehrkammerhohlprofil 14 einseitig gebogen ausgebildete, in gleichmäßigen Abständen über die Kühldecke verteilte Kühlelemente 12, wie z.B. Kühlkanäle 13, auf.

Bei den in den Fig. 1 bis 3 der Zeichnung dargestellten Ausführungsbeispielen ist das Mehrkammerhohlprofil 14 im wesentlichen geradflächig ausgebildet. Bei dem in der Fig. 4 der Zeichnung dargestellten Ausführungsbeispiel weist das Mehrkammerhohlprofil 14 endseitig wenigstens einen abgewinkelten Teilabschnitt 15 auf. Es wird dadurch die Fläche der Kühldecke für eine Wärmeabführung (durch Konvektion) vergrößert, da die Warmluft um das gesamte Profil herumgeführt wird. Bei dem in der Fig. 5 der Zeichnung dargestellten Ausführungsbeispiel weist das Mehrkammerhohlprofil 14 endseitig wenigstens einen abgebogen ausgebildeten Teilabschnitt 16 auf.

Die Fig. 3 der Zeichnung zeigt eine Ausführungsform, bei der das Mehrkammerhohlprofil 14 zusätzliche Mittel 17 zur Vergrößerung der Kühlfläche aufweist. In diesem Falle sind die zusätzlichen Mittel 17 zur Vergrößerung der Kühlfläche als an der Raumseite 18 des Mehrkammerhohlprofiles 14 befindliche Rippen 19 ausgebildet. Bei einer anderen Ausführungsform (in den Fig. der Zeichnung nicht separat dargestellt) ist vorgesehen, daß die zusätzlichen Mittel 17 zur Vergrößerung der Kühlfläche als eine an der Raumseite 18 oder der gesamten Oberfläche des Mehrkammerhohlprofiles 14 befindliche, strukturierte Oberfläche ausgebildet sind.

Bei den erfindungsgemäßen Profilen 10 ist vorgesehen, daß das Mehrkammerhohlprofil 14 an der Raumseite 18 farb- und/oder oberflächenveränderlich ausgebildet ist. Auf diese Weise kann eine einfache dekorative Anpassung der Kühlflache durchgeführt werden.

Das Profil 10 weist bei den Ausführungsbeispielen in Fig. 1 und 2 an seinen Endbereichen Verbindungselemente 20 zwecks Zusammenbau zu einer Kühlfläche auf. Diese Verbindungselemente 20 können eine beliebige, von den Fig. der Zeichnung abweichende Ausgestaltung haben.

In der Fig. 2 der Zeichnung ist beispielshaft die Anbringung des Profiles 10 an einer nicht bezeichneten Raumdecke, Zwischendecke od.dgl. über schematisch dargestellte Befestigungselemente 21 angedeutet. Es ist das erfindungsgemäße Deckenprofil 10 in beliebigen Räumen flexibel einbaubar, die dargestellten Befestigungselemente 21 können deshalb, ähnlich, wie die Verbindungselemente 20, unterschiedlichste Ausgestaltungen aufweisen.

Bei dem erfindungsgemäßen Profil 10 für eine Kühldecke kann auf zusätzliche Mittel zur Führung des Wärmeaustauschmediums, wie Kühlflüssigkeit, gänzlich verzichtet werden, da durch das Mehrkammerhohlprofil beide Funktionen Durchfluß des Mediums und Wärmeleitung erfüllt werden. Es lassen sich mit dem erfindungsgemäßen Mehrkammerhohlprofil flache Bauformen realisieren, es weisen diese Mehrkammerhohlprofile außerdem eine günstige Temperaturverteilung, d.h. insbesondere gleichmäßige Oberflächentemperatur auf. Neben den erwähnten Vorteilen der zwei Funktionen wird außerdem eine Wandstärkenreduzierung und dadurch eine Materialersparnis erreicht, und bei der einstückigen Ausführungsform kommt es aufgrund fehlender Verbindungsstellen zwischen den Materialien nicht zu dadurch bedingten reduzierten Wärmeleitungen. Weiterhin bietet das erfindungsgemäße Mehrkammerhohlprofil Möglichkeiten für gestalterische Variationen der Profilform z.B. für unterschiedliche Luftführungen. Bei dem erfindungsgemäßen Profil 10 verlaufen die Kühlelemente 12, wie Kühlkanäle 13, bevorzugt mäanderförmig, um die spezifische Kühlleistung zu erhöhen.

Wie bereits erwähnt, sind die dargestellten Ausführungsformen nur beispielsweise Verwirklichungen der Erfindung. Diese ist nicht darauf beschränkt, es sind vielmehr noch mancherlei Abänderungen und Ausbildungen möglich. So können die Mehrkammerhohlprofile 14 eine andere Ausgestaltung haben, als in den Fig. der Zeichnung dargestellt. Denkbar sind z.B. andere Querschnittsformen, wie z.B. Dreiecke od.dgl., weiterhin möglich sind auch z.B. mehrteilige Ausführungsformen. Das erfindungsgemäße Profil 10 ist in beliebigen Räumen einsetzbar, entsprechend variieren dann auch die Verbindungs- und Befestigungselemente 20, 21.

### Bezugszeichenliste:

- 10: Profil
- 11: Deckenabschnitt (von 10)
- 12: Kühlelement (von 10)
- 13: Kühlkanal
- 14: Mehrkammerhohlprofil
- 15: abgewinkelter Teilabschnitt (von 14)
- 16: abgebogener Teilabschnitt (von 14)
- 17: Mittel zur Vergrößerung der Kühlfläche
- 18: Raumseite (von 14)
- 19: Rippen (von 14 an 18)
- 20: Verbindungselemente (von 14)
- 21: Befestigungselemente (für 14)

## Patentansprüche

1. Profil für eine Kühldecke, Kühlwand oder Boden, insbesondere für eine offen oder geschlossen ausgebildete Kühldecke, mit einem Teil-, wie Deckenabschnitt und daran angeordneten Kühlelementen, wie z.B. Kühlkanälen, zur Führung eines Wärmeaustauschmediums, wobei die Kühlelemente in gleichmäßigen Abständen über die Kühldecke verteilt angeordnet sind,
**dadurch gekennzeichnet**,
daß das Profil (10) als Mehrkammerhohlprofil (14) ausgebildet ist.

2. Profil nach Anspruch 1, dadurch gekennzeichnet, daß das Profil (10) als einstückig ausgebildetes Mehrkammerhohlprofil (14) ausgebildet ist.

3. Profil nach Anspruch 1 und 2, dadurch gekennzeichnet, daß das Profil (10) als zweiteilig ausgebildetes Mehrkammerhohlprofil (14) ausgebildet ist.

4. Profil nach einem der Ansprüche 1 bis 3, dadurch gekennzeichnet, daß das Mehrkammerhohlprofil (14) rechteckig ausgebildete, in gleichmäßigen Abständen über die Kühldecke verteilte Kühlelemente (12), wie z.B. Kühlkanäle (13), aufweist.

5. Profil nach einem der Ansprüche 1 bis 3, dadurch gekennzeichnet, daß das Mehrkammerhohlprofil (14) kreisförmig ausgebildete, in gleichmäßigen Abständen über die Kühldecke verteilte Kühlemente (12), wie z.B. Kühlkanäle (13), aufweist.

6. Profil nach einem der Ansprüche 1 bis 3, dadurch gekennzeichnet, daß das Mehrkammerhohlprofil (14) einseitig gebogen ausgebildete, in gleichmäßigen Abständen über die Kühldecke verteilte Kühlelemente (12), wie z.B. Kühlkanäle (13), aufweist.

7. Profil nach einem der Ansprüche 1 bis 6, dadurch gekennzeichnet, daß das Mehrkammerhohlprofil (14) im wesentlichen geradflächig ausgebildet ist.

8. Profil nach einem der Ansprüche 1 bis 6, dadurch gekennzeichnet, daß das Mehrkammerhohlprofil (14) endseitig wenigstens einen abgewinkelten Teilabschnitt (15) aufweist.

9. Profil nach einem der Ansprüche 1 bis 6, dadurch gekennzeichnet, daß das Mehrkammerhohlprofil (14) endseitig wenigstens einen abgebogen ausgebildeten Teilabschnitt (16) aufweist.

10. Profil nach einem der Ansprüche 1 bis 9, dadurch gekennzeichnet, daß das Mehrkammerhohlprofil (14) zusätzliche Mittel (17) zur Vergrößerung der Kühlfläche aufweist.

11. Profil nach Anspruch 9, dadurch gekennzeichnet, daß die zusätzlichen Mittel (17) zur Vergrößerung der Kühlfläche als eine an der Raumseite (18) oder der gesamten Oberfläche des Mehrkammerhohlprofils (14) befindliche, strukturierte Oberfläche ausgebildet sind.

12. Profil nach Anspruch 9, dadurch gekennzeichnet, daß die zusätzlichen Mittel (17) zur Vergrößerung der Kühlfläche als an der Raumseite (18) des Mehrkammerhohlprofils (14) befindliche Rippen (19) ausgebildet sind.

13. Profil nach einem der Ansprüche 1 bis 11, dadurch gekennzeichnet, daß das Mehrkammerhohlprofil (14) an seiner Raumseite (18) farb- und/oder oberflächenveränderlich ausgebildet ist.
